# EUROPEAN PATENT APPLICATION

(11) **EP 2 985 451 A1**
(43) Date of publication of application: **17.02.2016**
(21) Application number: 15180652.8
(22) Date of filing: 11.08.2015
(51) Int. Cl.: F03B 17/06, F03B 13/26

(54) **SYSTEM AND METHOD FOR TRANSPORTATION AND A MAINTENANCE OF A WATER CURRENT POWER GENERATION SYSTEM**

(30) Priority: 12.08.2014 US 201462036416 P; 23.04.2015 US 201514694037
(71) Applicant: Anadarko Petroleum Corporation, The Woodlands, TX 77380 (US)
(72) Inventor: BOLIN, William D., Porter, TX Texas 77365 (US)
(74) Representative: Isfort, Olaf

(57) **Abstract**

The present invention relates to a water current power generation system (101, 201, 801, 1200) comprising at least one or more submerged flotation chambers (1207); one or more submerged induction type power generation units (104) disposed in communication with the one or more submerged flotation chambers (1207); one or more impellers (105, 202, 407, 408, 501, 802, 803, 901, 902, 1205, 1206) disposed in communication with the one or more submerged induction type power generation units (104); one or more body frame members (1203, 1204) disposed in communication with the one or more submerged induction type power generation units (104); and one or more impeller rotation means (1210) disposed in communication with the one or more body frame members (1203, 1204). A variety of additional structures useful together, individually or in various combinations with the disclosed system, are also disclosed. Moreover, the invention relates to a method of transporting and maintaining the system, or individual components and subsystems thereof.

## Description

The present invention relates generally to renewable energy power generation systems, and in particular though non-limiting embodiments, to detailed methods and means for transporting and maintaining a water current power generation system.

In addition to the illustrative embodiments presented in this disclosure, many of the systems and subsystems described and claimed herein are individually suitable for systems using conventional generator drive systems and other means of power creation.

With the rising cost of fossil fuels and increased energy demand in the world's economies and industries, different and more efficient methods of developing energy sources are constantly being sought. Of particular interest are renewable alternative energy sources, such as solar power systems, windmill farms, tidal power generators, wave generators, and systems deriving power from sequestered hydrogen.

However, such energy sources are not yet capable of delivering continuous power to a widespread area on a commercial scale. Moreover, some proposed technologies, such as hydrogen powered systems involving the refinement of seawater, currently consume more power in the conversion process than is output at the end of the process.

Others, such as hydrogen derived from methane, produce equal or greater amounts of fossil fuel emissions than the conventional hydrocarbon-based technologies they are intended to replace, and still others, such as solar- and windmill-based systems, require such consistent exposure to sunlight or wind that commercial effectiveness is currently limited.

One proposed alternative energy system involves the harnessing of hydro power derived from fast moving water currents, for example, currents having peak flow velocities of 2 m/s or more.

In practice, however, existing underwater power generating devices have proven inadequate, even where installed at sites where current velocities are consistently very fast. This is due, at least in part, to both a lack of efficient means for generating the power, and a prior lack of suitable power transformation systems necessary to compensate for incompatibilities between underwater power generating systems and attendant land or waterborne power relay stations.

Existing impeller designs and waterborne power generating mechanisms have generally also proven to be inadequate, failing to provide either adequate energy generation or sufficient stability against maximum or velocity currents.

To capture a significant amount of kinetic energy from flowing ocean currents, the affected area must be expansive. As a result, previous marine impeller designs have employed prohibitively large, heavy and expensive structures made from heavy metal and composite metal technologies. Moreover, such marine impellers create cavitation issues originating from the tips of the impeller blades moving through surrounding water.

Another significant problem has been the environmental issues associated with obtaining energy from water currents without damaging surrounding aquatic life, such as reefs, marine foliage, schools of fish, etc.

Therefore, it is an object of the present invention to provide a water current power generation system and accompanying subsystems that overcome the problems currently existing in the art, and which generate and compatibly transfer a significant amount of power to a relay station in a safe, reliable, and environmentally-friendly manner. Safe and efficient field-level configurations, reliable and repeatable mooring systems, and methods and means for installing and maintaining such systems are also required.

The invention discloses a water current power generation system according to claim 1 and a method according to claim 8. Advantageous embodiments of the invention are subject-matter of the dependent claims. It should be noted that the individually mentioned features in the claims can be combined with each other in any technical and meaningful way and show further embodiments of the present invention.

According to the present invention a water current power generation system comprises: one or more submerged flotation chambers; one or more submerged induction type power generation units disposed in communication with said one or more submerged flotation chambers; one or more impellers disposed in communication with said one or more submerged induction type power generation units; one or more body frame members disposed in communication with said one or more submerged induction type power generation units; and one or more impeller rotation means disposed in communication with said one or more body frame members.

In a preferred embodiment of the present invention, said water current power generation system is at least partially submerged within a body of water, and said one or more submerged induction type power generation units and said one or more impellers are rotated by said one or more impeller rotation means such that said one or more impellers are rotated above and approximately parallel to the wave surface of the water during maintenance of the water current power generation system.

Another preferred embodiment comprises a water current power generation system wherein said water current power generation system is at least partially submerged within a body of water and said one or more submerged induction type power generation units and said one or more impellers are rotated by said one or more impeller rotation means such that said one or more impellers are rotated above and approximately parallel to the wave surface of the water during transportation or relocation of the water current power generation system.

In another advantageous embodiment of the present invention, said water current power generation system is submerged within a body of water between the body of water floor surface and the wave surface of the water, and said one or more impeller rotation means is disposed such that said one or more impellers are oriented approximately perpendicular to said wave surface of the water during power generation operations.

Another preferred embodiment comprises a water current power generation system wherein said one or more impeller rotation means further comprises one or more rotatable shafts.

Another preferred embodiment comprises a water current power generation system wherein one or more impeller rotation means further comprises one or more locking mechanisms.

In an advantageous embodiment of the present invention said water current power generation system further comprises: one or more submerged flotation chambers, wherein one or more of said submerged flotation chambers further comprises one or more buoyant fluid isolation chambers, and wherein one or more of said buoyant fluid isolation chambers further comprises one or more of a buoyant fluid disposed therein; a buoyant fluid intake valve; a buoyant fluid exit valve; and a buoyant fluid control means.

Furthermore, the invention relates to a method of maintaining an at least partially submerged water current power generation system. Said method comprises: disposing one or more submerged induction type power generation units in communication with one or more impellers; disposing one or more rotatable frames in communication with said one or more submerged induction type power generation units; lifting said one or more submerged induction type power generation units so that said one or more impellers are lifted out of the water; and rotating said one or more rotatable frames so that said one or more impellers are disposed above and approximately parallel to the surface of the water.

Another preferred embodiment comprises a method of maintaining an at least partially submerged water current power generation system further comprising disposing said one or more rotatable frames in communication with a rotation shaft.

Another preferred embodiment comprises a method of maintaining an at least partially submerged water current power generation system further comprising disposing said one or more rotatable frames in communication with a locking rotation shaft.

Another preferred embodiment further comprises a method of maintaining an at least partially submerged water current power generation system wherein said rotating step further comprises controlling said rotating using a logic control system disposed in communication with a pneumatic rotation control means.

In an advantageous embodiment, said rotating step further comprises controlling said rotating using a logic control system disposed in communication with a hydraulic rotation control means.

Moreover, the invention relates to a method of transporting an at least partially submerged water current power generation system, wherein said method comprising: disposing one or more submerged induction type power generation units in communication with one or more impellers; disposing one or more rotatable frames in communication with said one or more submerged induction type power generation units; lifting said one or more submerged induction type power generation units so that said one or more impellers are lifted out of the water; and rotating said one or more rotatable frames so that said one or more impellers are disposed above and approximately parallel to the surface of the water.

Another preferred embodiment comprises a method of transporting an at least partially submerged water current power generation system further comprising disposing said one or more rotatable frames in communication with a rotation shaft.

Another preferred embodiment comprises a method of transporting an at least partially submerged water current power generation system further comprising disposing said one or more rotatable frames in communication with a locking rotation shaft.

In an advantageous embodiment, said rotating step further comprises controlling said rotating using a logic control system disposed in communication with a pneumatic rotation control means.

Another preferred embodiment comprises a method of transporting an at least partially submerged water current power generation system wherein said rotating step further comprises controlling said rotating using a logic control system disposed in communication with a hydraulic rotation control means.

Further advantages and features of the present invention are elucidated in the following by way of examples of embodiments shown in the relevant figures, wherein:
- Figure 1: shows a side view of a water current power energy generation system according to one example embodiment of the invention,
- Figure 2: shows a front view of a water current power energy generation system according to a second example embodiment of the invention,
- Figure 3: shows a plan view of a ballast tube having a plurality of labyrinth type isolation chambers according to a third embodiment of the invention,
- Figure 4A: shows a top view of a water current power energy generation system according to a fourth example embodiment of the invention,
- Figure 4B: shows a top view of the example embodiment depicted in Figure 4A, further including an associated tether anchoring system,
- Figure 5: shows a front view of an example impeller system embodiment suitable for use in connection with a submerged or waterborne power generation system,
- Figure 6: shows a perspective view of the example impeller system embodiment depicted in Figure 5, with a detailed portion of the system isolated for additional perspective,
- Figure 7: shows an isolation view of a portion of the example impeller system embodiment depicted in Figures 5 and 6,
- Figure 8: shows a side view of an example water current power generation system further comprising a drag mounted impeller array,
- Figure 9: shows a rear view of the example water current power generation system depicted in Figure 8, comprising an even number of impellers that facilitate offsetting rotational forces in a drag mounted array,
- Figure 10: shows a schematic view of an example water current power generation farm comprising a plurality of linked power generation systems,
- Figure 11: shows a schematic view of a permanently moored water current power generation system in which no flotation skid or Spar is used,
- Figure 12: shows a side view of an example four-unit flip design power generation system, comprising a plurality of generator pods and a plurality of associated impellers disposed in an operational position,
- Figure 13: shows a front view of an example four-unit flip design power generation, comprising a plurality of impellers disposed in an operational position suitable for power generation,
- Figure 14: shows a side view of an example four-unit flip design power generation system, comprising a plurality of generator pods and a plurality of associated impellers disposed in a flipped position suitable for installation or maintenance,
- Figure 15: shows a top view of Figure 14, comprising a four-unit flip design power generation, wherein the impellers are disposed in a flipped position suitable for installation or maintenance.

The description that follows includes a number of exemplary system designs and methods of use therefore, which embody and facilitate numerous illustrative advantages of the presently inventive subject matter. However, it will be understood by those of ordinary skill in the art that the various embodiments described herein may admit to practice without one or more of the specific technical details associated therewith. In other instances, well-known sub-sea and power generating equipment, protocols, structures and techniques have not been described or shown in detail in order to avoid obfuscation of the invention.

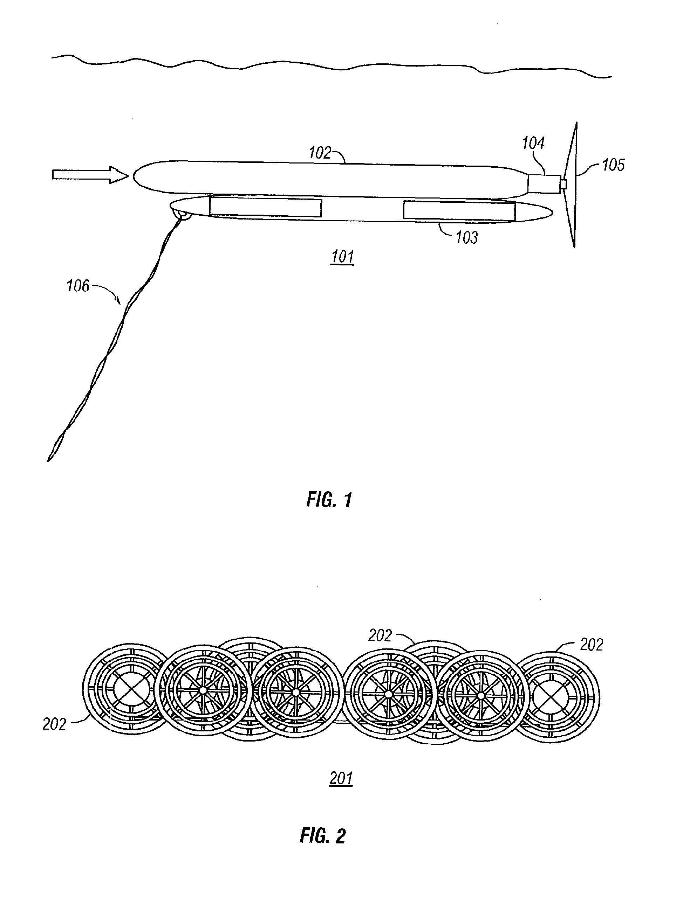

Figure 1 depicts a first example embodiment of a water current power generation system 101. In its simplest form, the system comprises one or more of a flotation tube 102, a ballast tube 103, and an induction type power generation unit 104 equipped with a shaft-driven impeller 105.

While Figure 1 depicts only a single flotation tube 102, ballast unit 103 and generator component 104, larger systems comprising a plurality of any or all such structures is also contemplated. In any event, those of skill in the pertinent arts will readily appreciate that the instant description of a limited system with singular elements is merely illustrative, and is not intended to limit the scope of the subject matter with respect to plural members of any of the elements disclosed herein.

In one example embodiment, a power generation unit 104 (for example, an induction type power generation unit) produces electrical power that can be output either with or without transformation as either an alternating current (AC) or a direct current (DC) to an associated relay station or other means for facilitating transfer of power from offshore to a neighboring power grid or the like.

Generally, asynchronous induction-type generators are mechanically and electrically simpler than other types of synchronous electrical power generators or direct current (DC) generators. For example, an induction motor converts to an outputting power generator when the energy for the magnetic field comes from a stator, or when the rotor has permanent magnets creating a magnetic field thereby imparting negative slip. They also tend to be more rugged and durable, usually requiring neither brushes nor commutators. In many cases, a regular AC asynchronous motor can also be used as a generator, without any internal modifications.

In normal motor operation, the stator flux rotation of the motor is set by the power frequency (typically around 50 or 60 Hertz) and is faster than the rotor rotation. This causes stator flux to induce rotor currents, which in turn creates rotor flux having a magnetic polarity opposite the stator. In this manner, the rotor is dragged along behind the stator flux in value equal to the slip.

A three-phase asynchronous (e.g., cage wound) induction machine will, when operated slower than its synchronous speed, function as a motor; the same device, however, when operated faster than its synchronous speed, will function as an induction generator.

In generator operation, a prime mover of some sort (e.g., a turbine, engine, impeller drive shaft, etc.) drives the rotor above the synchronous speed. Stator flux still induces currents in the rotor, but since the opposing rotor flux is now cutting the stator coils, active current is produced in the stator coils, and thus the motor is now operating as a generator capable of sending power back toward a neighboring electrical grid.

Therefore, in certain embodiments, induction generators are used to produce alternating electrical power whenever an internal shaft is rotated faster than the synchronous frequency. In various embodiments, shaft rotation is accomplished by means of an associated impeller 105 disposed in a relatively fast moving water current, though other methods and means of shaft rotation could also be conceived and applied to similar effect.

Since they do not have permanent magnets in the rotor, one limitation of induction generators is that they are not self-exciting; accordingly, they use either an external power supply (as could easily be obtained from the grid using an umbilical run either through the water or beneath an associated seafloor), or are "soft started" by means of a reduced voltage starter in order to produce an initial rotation magnetic flux.

Reduced voltage starters, in certain embodiments, lend advantages to the system, such as quickly determining appropriate operational frequencies, and permitting an unpowered restart in the event the attendant power grid is deactivated for some reason, for example, as a result of damage caused by a hurricane or other natural disaster.

Power derived from the system will, at least in some cases, likely be used to supplement a neighboring power grid system, and thus the operating frequencies of the grid will in large part dictate the frequency of operation for the power generation system. For example, the vast majority of large power grid systems currently employ a nominal operating frequency of between 50 and 60 Hertz.

Another important consideration for large waterborne power generating systems is the establishment of a well-balanced flotational equilibrium that allows for continuous dynamic position regardless of surrounding current velocities.

Even assuming that surrounding current velocities remain within a predetermined range of acceptable operating velocities, system equilibrium could still be jeopardized by an especially powerful hurricane or the like, but disposition of the system well under the line of typical wave force, i.e., approximately 100-150 feet deep or so, will greatly reduce such disturbances. The various offsetting forces of gravitational kips, flotation kips, drag kips and holding kips will also contribute to the overall stability of a continuous water current energy generating system.

The flotation tube 102 illustrated in Figure 1 comprises a cylindrical body portion disposed in mechanical communication with at least one end cap unit 104 that houses the aforementioned induction generators. The generators and associated end cap housings contain a drive shaft and, in some embodiments, related planetary gearing for impeller 105.

In some embodiments, flotation tube 102 comprises a cubical or hexagonal shape, though effective practice of the invention will admit to other geometries as well. In an example embodiment, flotation tube 102 is approximately cylindrical, and pressurized with gas (e.g., air or another safe, buoyant gas) so that, when the system is restrained by anchored tether 106, the combined forces will constitute the primary lifting force for the ocean current energy generating system.

Accordingly, the system can be raised to the surface for maintenance or inspection by turning off the generators, thereby reducing drag on the system, which allows the system to rise somewhat toward the surface. By opening the flotation tube(s) and/or evacuating fluid from the ballast tube(s), the unit can be safely and reliably floated to the surface so that maintenance or inspection can be performed.

According to a method of moving the system, tether 106 can also be released, so that the floating structure can be towed or otherwise powered toward land or another operating site.

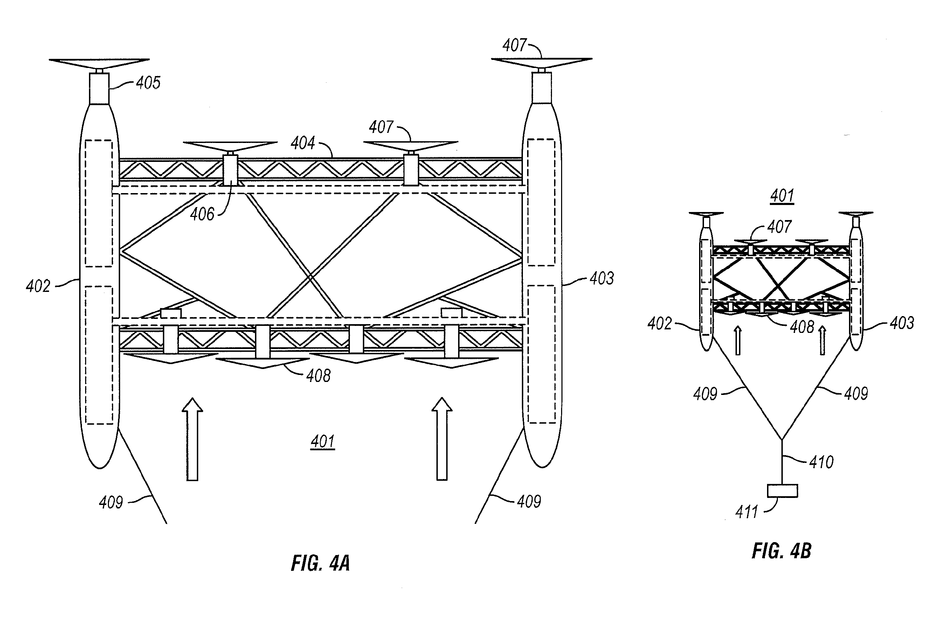

The example embodiment depicted in Figure 2 is a front view of an example power generation system 201 equipped with a plurality of relatively large, slow moving impellers 202 disposed in mechanical communication with the shaft members of a plurality of corresponding induction generator units (not shown). As seen in the example details depicted in Figure 4A, the generator units are disposed within end cap units 405 housed within flotation tubes 402 and 403, as well as across the span of a lattice type body portion 404 of the structure disposed between the flotation tubes 402 and 403.

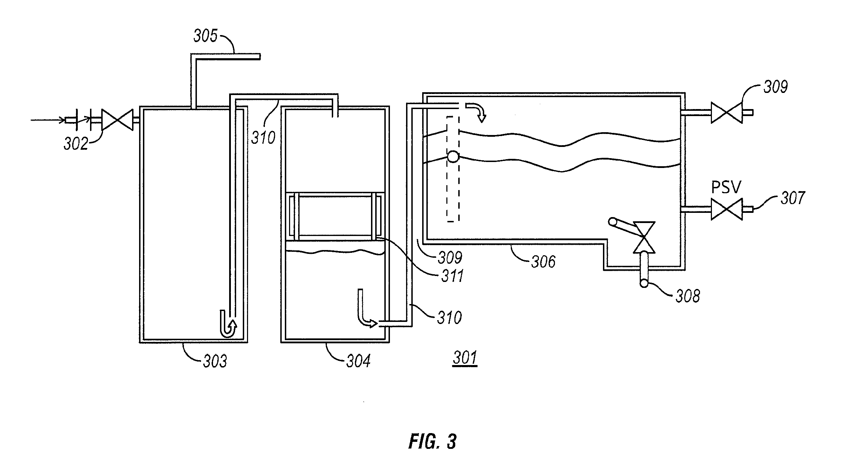

Turning now to Figure 3, an illustrative plan view of the inside of the ballast tubes previously depicted as item 103 in Figure 1 is provided, in which a plurality of labyrinth type isolation chambers 303 and 304 are joined in such a manner that separation and mixture of various gases and liquids can be used to permit much finer control of the balance and flotational forces present in the system than can be obtained by means of floatation tubes 102 alone.

As seen in the depicted embodiment, an interior ballast system 301 can be formed within the ballast tube comprising an air control source 302 disposed in fluid communication with an overpressure check valve and a first isolation chamber 303.

In other embodiments, first isolation chamber 303 contains both a dry gas (e.g., air having a pressure equal to the surrounding outside water pressure) present in an upper portion of the chamber, and a carrier fluid (e.g., seawater drawn in from outside the isolation chamber) present in a lower portion of the chamber.

In further embodiments, first isolation chamber 303 also comprises a secondary air feed line 305 for distributing air to other gas-filled compartments of the structure. Further, as shown in the depicted embodiment, lines 310 are provided for mixtures of gas and fluid to flow from first isolation chamber 303 to second isolation chamber 304, and from second isolation chamber 304 to final isolation chamber 306. In this embodiment, second isolation chamber 304 in turn comprises an upper portion containing air and a lower portion containing water or the like, which are separated by a separating means, e.g., an isolation cylinder 311. In other embodiments, the isolation cylinder 311 contains sea water upon which floats a barrier fluid in order to ensure better isolation between the air and seawater.

In still further embodiments, either (or both) of the first and second isolation chambers 303, 304 are equipped with instrumentation (e.g., pressure sensors, differential pressure sensors, etc.) to determine whether fluid or air is present in a particular cavity of the system. In further embodiments still, such sensors are input into a logical control system (not shown) used to assist in the detection and control of balance and thrust related measurements.

The process of advancing air through the system in upper portions of the chambers while ensuring that water or other liquids remain in the lower portions is continued until desired balance and control characteristics are obtained. In some embodiments, therefore, a final isolation chamber 306 or the like is provided, which, in the depicted embodiment, comprises an air outlet valve 309 used to let air out of the system and, in some embodiments, water into the system.

In some embodiments, pressure safety valve 307 is provided in the event internal pressures become so great that a venting of pressure is required in order to maintain the integrity of system control; in others, an open water flow valve 308 fitted with a screen to prevent accidental entry by sea creatures is disposed in a lower portion of the final isolation chamber 306.

Barrier fluids and the like can be used to reduce interaction between air and water, and when the system is fitted with a float control floating on top of the sea water, the barrier fluid can be retained even after all of the sea water is expelled. In some embodiments, greater stability is achieved in the tanks using a series of baffles to ensure water trapped in the tanks does not move quickly within the chambers, which would otherwise tend to disrupt balance and control. Moreover, multiple tanks and sectionalization are employed in some embodiments to address possible unit tilt, so that water and gas are appropriately diverted until weight distribution and system equilibrium are maintained.

Figure 4A presents a top view of an embodiment of the disclosed system 401 comprising a first flotation tube 402 and a second flotation tube 403; a connecting, lattice-like body portion 404 disposed there between; a plurality of induction generators disposed in end cap units 405, 406 and positioned strategically around the floatation tubes 402, 403 and other body portions; a plurality of front impellers 408 and rear impellers 407 disposed in mechanical communication with the generators; and a plurality of tethering members 409 disposed in mechanical communication with the flotation tubes 402, 403.

In the example embodiment depicted in Figure 4B, tethering members 409 are joined to form a single anchoring tether 410 that is affixed in a known manner to anchoring member 411.

In various embodiments, anchoring tether 410 further comprises means for variably restraining and releasing the system. In various other embodiments, anchoring tether 410 terminates at an anchoring member 411 equipped with a tether termination device (not shown). Anchoring member 411 comprises any type of known anchor (e.g., a dead-weight anchor, suction anchor, etc.) suitable for maintaining a fixed position in fast moving currents, which are usually found in locations with rocky seafloors due to soil erosion caused by the fast moving currents.

In still other embodiments, this portion of the station can be secured by attaching anchoring tether 410 to either a surface vessel or another ocean current energy generating device, or to another central mooring location such as a floating dynamic positioning buoy.

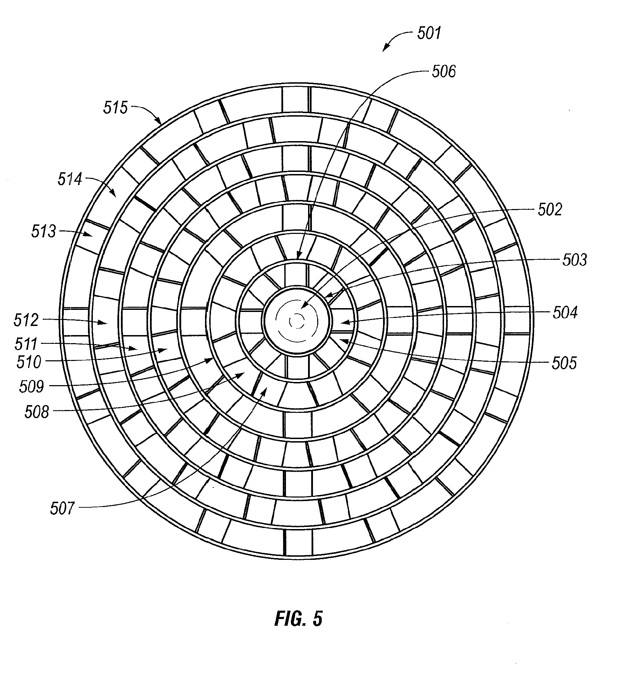

Turning now to the example impeller system embodiments discussed above, Figures 5 - 7 depict several specific though non-limiting example embodiments of an impeller system suitable for use with the water current power generation system disclosed herein.

Those of ordinary skill in the pertinent arts will appreciate, however, that while the example impeller systems disclosed herein are described with reference to a water current power generation system driven by an induction-type power generator, the example impeller systems can also be used in connection with other types of submerged or waterborne power generation systems to achieve many of the same advantages taught herein.

Figure 5, for example, is a front view of an example impeller system embodiment suitable for use in connection with a submerged or waterborne power generation system.

As depicted, impeller 501 comprises a plurality of alternating fin sets and enclosing rings, which will hereinafter be referred to as a "fin-ring" configuration. Such fin-ring impellers would typically be designed to specification for each particular application, and improved efficiency will be realized by tailoring the diameter, circumference, fin curvature and disposition eccentricity, material selections, etc., based on the operational frequencies required by the induction generators, the speed of surrounding water currents, environmental considerations (e.g., whether the impellers should have openings or voids through which fish or other aquatic life may pass), and so on.

Similarly, neighboring sets of impellers can be rotated in opposite directions (e.g., either clockwise or counterclockwise, as representatively depicted in Figure 2) in order to create eddies or dead zones in front of the impellers, which can repel or otherwise protect marine life, enhance impeller rotation efficiency, etc.

When used in connection with a water current power generation system driven by an induction-type power generator, it is desirable that the impellers are capable of rotating associated generator shafts at speeds capable of creating operational generator frequencies.

However, in certain embodiments, the system as a whole remains passive (or nearly so) with respect to interaction with local marine life, and optimal performance results are achieved when the system generates the required power output while still maintaining an environmentally neutral operating environment.

In this embodiment, beginning in the center of the device it is seen that impeller 501 is disposed around a hub or shaft portion 502 that both holds the impeller 501 securely (e.g., by means of mechanical affixation, such as encapsulated rust-resistant fasteners, welding a impeller body or multiple pieces of a impeller body to a shaft into a single unitary whole, etc.) and imparts a rotational torque proportional to the angular momentum of the rotating impeller onto the shaft for delivery to the power generator.

In some embodiments, hub or shaft portion 502 further comprises a flotation means designed to improve the mechanical connection of the fin-ring impeller to the shaft, and to prevent overhang of the impeller that would otherwise tend to deform or stress the shaft. Like the affixation means, drive shafts appropriate for this task may currently exist in the art of record, and may comprise, for example, a series of gears and/or clutches, braking systems, etc., as would be required to effectively communicate the impeller's rotational torque to the generator shaft.

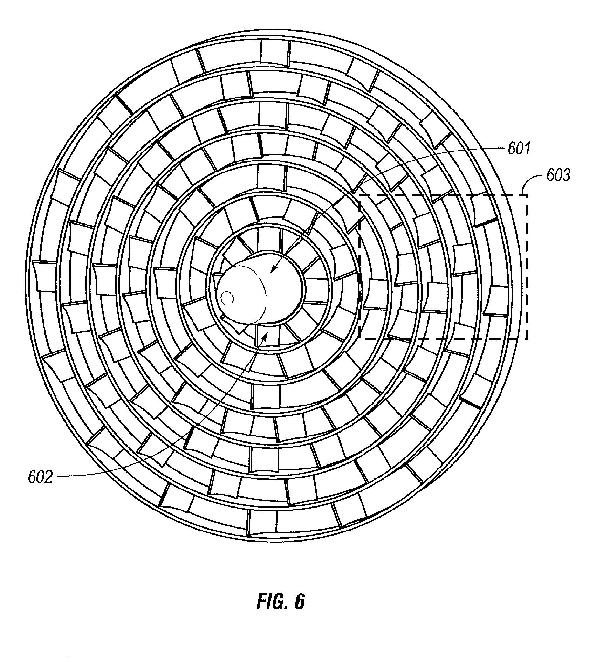

In one specific though non-limiting embodiment, a retaining fastener such as a bolt and washer assembly or the like is removed from the end of a drive shaft, the fin-ring impeller structure is slipped over the exposed shaft, and then the fastener is replaced, thereby mechanically affixing the fin-ring structure to the shaft. In a further embodiment, the fastener is then covered by a buoyant watertight cover or the like as representatively depicted in Figure 6, item 601.

In other embodiments, a central hub comprises the connection point for mechanical communication with a stiff, durable shaft, which can be either installed in a structurally integral fashion, or removed and replaced as a modular assembly so that the impeller can be easily serviced and maintained while in the water.

In other embodiments, the system further comprises a flotation means in order to resist the overhanging load of the shaft and impeller assembly. For example, liquid foam or other light fluid chemicals, or even compressed air, can be loaded into a nose cone that fits over the end of an impeller hub, so that the impeller is free to rotate around a drive shaft behind the buoyant nose cone, thereby lifting the weight of the assembly so that heavy overhanging loads are avoided.

Similarly, the impellers (for example, the front impellers in a submerged system, which absorb most of the force of the water current) can be drag mounted to overcome resistance attributable to cumulative fluid pressure against the fin-ring structure. In other embodiments, as shown in Figures 4A and 4B, the impellers 408 are front mounted and the rear impellers 407 are drag mounted.

Regardless of how the impeller is affixed to the shaft and whether it is drag mounted and/or supported by a flotation member, the example embodiment of the fin-ring design depicted herein is generally similar across a multitude of other, related embodiments suitable for practice within the system.

For example, in the embodiment depicted in Figure 5, the hub attachment assembly 502 is concentrically surrounded by a first ring member 503, beyond which (i.e., further out from the hub assembly) is a second ring member 506. Disposed between first ring member 503 and second ring member 506 is a plurality of fin members 504, each of which is separated by a gap 505.

In various embodiments, the gap space between fin members 504 will vary by application, but as a general matter the gaps between fins will increase in size from the innermost ring (in which the gaps are typically the smallest) to the outermost rings (where the gap space is the largest).

Other configurations admit to gaps of similar sizes, or larger gaps on inner rings than on outer rings, but an advantage of a mostly solid inner ring surface, wherein most of the entirety of the ring's possible surface area is utilized by fins rather than gaps, is that the structure will tend to force fluid pressure away from the center of the structure toward the outermost rings and beyond the perimeter of the device.

This approach helps the impellers rotate more easily, and addresses environmental concerns by forcing small marine life and the like toward the outside of the system, so that they can either avoid the impeller structure altogether, or else pass through one of the slow moving larger gaps in the outer rings.

Since resistance against the structure is reduced and greater rotational torque is transmitted to the drive shafts with less drag and loss, the impeller can also be rotated very slowly (in one example embodiment generating satisfactory field results, the impeller rotates at a speed of only 8 RPM), further ensuring that marine life will be able to avoid the structure and enhancing environmental neutrality and safety. The slow rotational speeds also make the system more rugged, durable and less likely to suffer damage if contacted by debris or a submerged object floating nearby.

Successive concentric rings of fins 507 and gaps 508 disposed within additional approximately circular rings 509 are then added to the structure, thereby creating additional concentric rings of fins and gaps 510-512 until the desired circumference has been achieved. In an example embodiment, the gap spaces 514 of the outermost ring are the largest gap spaces in the system, and separate fins 513 to the system's greatest extent.

A final ring member 515 encloses the outer periphery of the impeller system, again providing further environmental protection, as marine life inadvertently striking the outside ring 515 will encounter only a glancing blow against a slowly-moving structure, while water and fluid pressures are forced away from the device as much as possible.

As seen in the boxed region 603 of Figure 6 (which generally depicts the example embodiment of Figure 5, though with the hub attachment portion covered with a water-proof cap 601 or the like), the pitch of fins 602 measured relative to the plane of the fin-ring assembly is altered.

For example, the fins can be disposed with greater eccentricity as their position within the assembly is advanced from the first ring surrounding the central hub toward the outermost rings. Disposing fins 602 at a flatter pitch within the interior rings and more eccentrically (i.e., in a plane more perpendicular to the assembly plane) in the outer rings will tend to flatten and smooth the water flow around the impeller, thereby achieving superior fluid flow characteristics (which minimizes system vibration), creating less resistance against the impeller structure, and providing a greater surrounding centrifugal fluid force to assure that marine life avoids the center of the impeller system.

On the other hand, impellers having fin arrays arranged such that fins closest to the hub have the greatest eccentricity measured relative to the plane of the impeller as a whole, and then flattening out as the fins are arranged toward the outside of the impeller system (as is typical with a boat or submarine impeller, for example) may also yield the best results in terms of vibration reduction, harmonics and overall system performance.

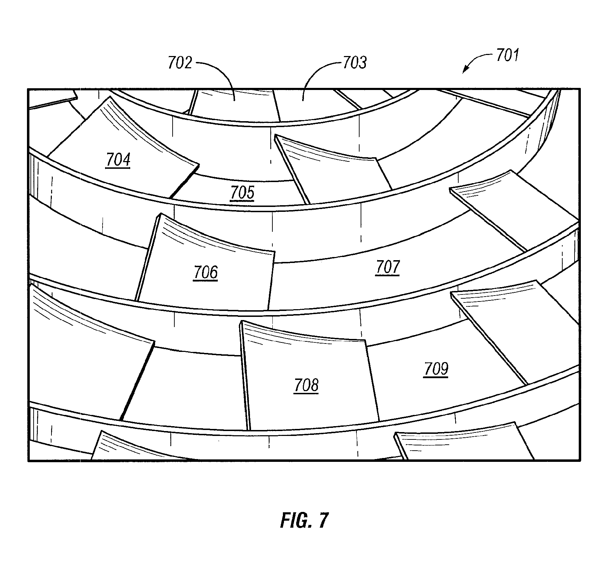

In the example embodiment 701 depicted in Figure 7 (which is representative of the boxed region 603 in Figure 6), a series of curved fins 702, 704, 706, 708 are disposed between gaps 703, 705, 707, 709 of increasing size (note that the center attachment hub from which the smallest concentric rings originate would be located beyond the top of the Figure, e.g., above fin 702 and gap 703).

In the depicted embodiment, fins 702, 704, 706, 708 are also disposed with greater eccentricity as they are installed further and further from the hub, so that the disposition angle of fin 708 measured relative to the assembly plane would be greater than that of fins 702, 704, 706 disposed nearer the center attachment hub.

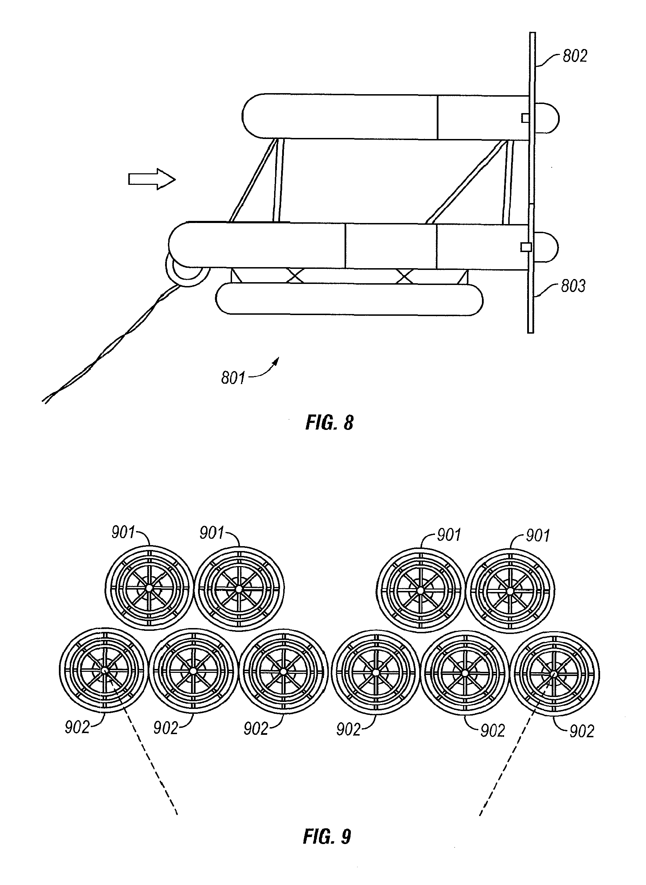

In the example embodiment depicted in Figure 8, a tethered, submerged water current power generation system 801 is provided in which each of the impellers 802, 803 are drag mounted, so that power interference from a front mounted array is avoided, and greater system stability and power efficiency is achieved. As seen, this particular configuration admits to one or more impellers disposed in both an upper drag mount position and a lower drag mount position, though disposition of multiple impeller arrays in either a greater or fewer number of levels is also possible.

In Figure 9, which is essentially a rear view of the alternative embodiment depicted in Figure 8, it is seen that one specific though non-limiting embodiment comprises an impeller array having ten total impellers, with six impellers 902 being disposed in a lower drag mount position, and four impellers 901 being disposed in an upper drag mounted position, with the upper position array being further distributed with two impellers on each side of the power generation system.

This particular embodiment admits to advantageous power generation characteristics, while stabilizing the attendant system structure by minimizing vibration and allowing evenly matched pairs of impellers to run in opposite rotational directions.

While such configurations are optimal for certain embodiments of a power generation system, a virtually limitless number of other arrays and disposition configurations can instead be employed when deemed effective in a given operational environment.

As a practical matter, the composition of the entire fin-ring impeller structure would likely be common, for example, all made from a durable, coated or rust-resistant, lightweight metal. However, differing material compositions between fins and rings is also possible, and other materials such as metallic composites, hard carbon composites, ceramics, etc., are possible without departing from the scope of the instant disclosure.

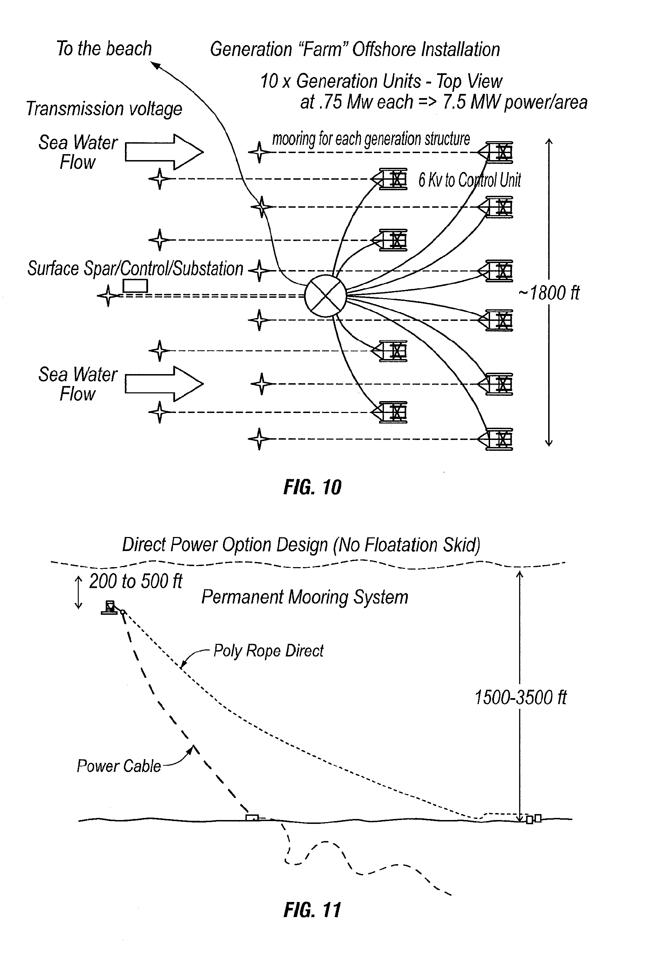

As depicted in Figure 10, when there is a need for a number of power generation structures in an area, the power system can be consolidated for efficiency, with power and control connections being linked back to a central location, such as a control substation, established near the installed units. This consolidation of units occurs in some embodiments on the ocean floor, and in other embodiments, on (or near) a mid-water floating structure.

In certain embodiments, the control substation is installed on a floating surface structure like a SPAR, or in other embodiments, it is a submerged control substation, possibly using a buoy system, which can be floated to the surface for maintenance, or even fixed upon the ocean floor.

In deep water, an ocean floor common connection installation requires more power cables and additional control systems that increases the cost and complexity of the system, and is harder to maintain than an installation constructed nearer currents at the ocean surface.

In certain example embodiments, a mid-floating structure constructed using elements similar to the flotation skids associated with the generation units provides a common power collection location while not leaving any permanent structure penetrating the water surface. This configuration uses fewer long power and control lines run to the ocean floor, and would leave adequate draft for ships in the area.

The third type of common collection location comprises a structure that is moored to the ocean floor and floats on the ocean surface near the generation units. This approach could comprise many types of different structures. In certain embodiments, a SPAR (as shown in Figure 10) is utilized for design and stability during weather events and hurricanes because of its reduced wind and wave profile.

A power consolidation station allows for transformation to a higher transmission voltage, thereby achieving superior and scalable power transfer capacity to a land connected power transmission grid. Allowing for higher transmission voltages also provides installations located further from land with good power transmission results. Ultimate power transformation can be performed in either the consolidation station or one or more power transformers installed on an ocean floor mud mat.

Depending upon other variables, in certain embodiments, a land based synchronous device (such as a large synchronous motor or a large variable speed electronic driver, etc.) is used to stabilize the power grid when offshore ocean current generation is significantly greater than the onshore generation grid.

For significant lengths out at sea, according to some embodiments, a DC high-voltage power transmission connection runs from the consolidation structure all the way back to the beach. The AC power needed for the individual generation units is generated from the DC voltage to three-phase AC in order to power the induction generators. At or near the shore, the DC is connected to the power grid or smart grid as with a conventional DC power interconnection.

In the example embodiment depicted in Figure 11, in deeper ocean locations, a SPAR need not be supported by flotation skids, and could therefore serve as a consolidation facility useful for scalably connecting and disconnecting a plurality of individual power generation units. As depicted, a SPAR submerged approximately 200-500 feet (60,96 - 152,4 Meter) is permanently moored to the ocean floor using a strong, secure mooring means, such as a thick poly rope. In certain embodiments, the poly rope is first wound in one direction and then covered with a second rope wound in the opposite direction, resulting in a combined, alternately wound line which is very strong and resistant to twisting and knotting.

Recognizing that the weight of steel cabling affects design aspects with regard to flotation for the consolidation facility, according to example embodiments, a stranded steel cable mooring line with a power cable enclosed within the center is integrated therewith.

In example embodiments, a separate power cable is run from the SPAR to a transformer or transmission box installed on the bottom of the sea floor, and then run beneath the sea floor toward its ultimate destination.

Yet another approach is to run the power cable through an interior void of a poly rope or other mooring line, so that there is only a single line extending from the SPAR, and the power cable is protected from damage by the mooring line.

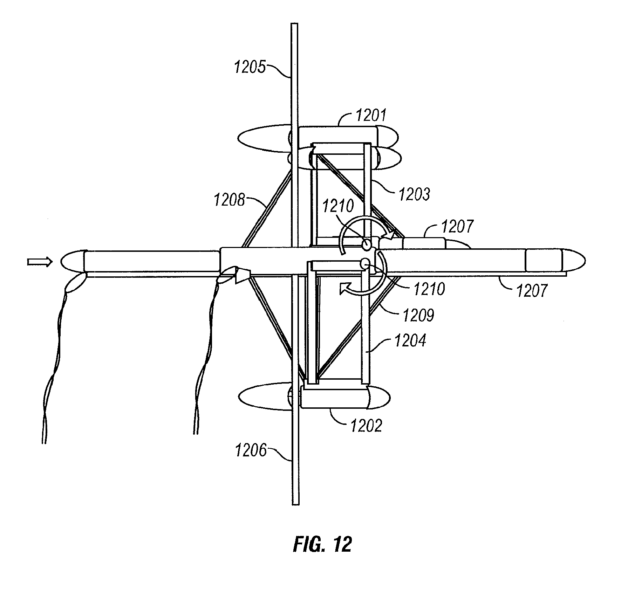

Turning now to a more robust, single-station type induction power generation system (e.g., an embodiment utilizing 40-foot (12,192 Meter) and larger impellers), Figure 12 is a side view of an example four-unit flip design power generation system 1200 in which a plurality of front mounted induction generator pods 1201, 1202 are disposed upon a corresponding plurality of frames 1203, 1204. In the depicted embodiment, the induction generator pods 1201, 1202 are disposed in mechanical communication with flotation chambers 1207 using connecting members 1208. According to further embodiments, the impellers 1205, 1206 are disposed in communication with the induction generator pods 1201, 1202 and, as depicted in Figure 12, are in a "flipped down" power generation mode.

In certain embodiments, the impellers 1205, 1206, along with associated generation units 1201, 1202, are disposed in mechanical communication with a rotation means 1210. According to certain embodiments, rotation means 1210 is a rotatable shaft or the like, and the rotation means 1210 is rotated, either mechanically or using a logic control system disposed in communication with control system (e.g., a pneumatic or hydraulic control system, etc.) in order to "flip up" the impellers 1205, 1206 for safe and efficient access to the generation pods 1201, 1202 and impellers 1205, 1206 for maintenance, repair, and/or installation. In certain embodiments, using the ballast system disposed in communication with the flotation chambers 1207, the structure is floated to the surface for safe and efficient access to the generation pods 1201, 1202 and impellers 1205, 1206 for maintenance and repair.

In further embodiments, rotation means 1210 is rotated, either mechanically or using a logic control system disposed in communication with a pneumatic or hydraulic control system, in order to "flip down" the impellers 1205, 1206 and associated generation pods 1201, 1202 for generating power using water currents, once the system is placed in the appropriate location for power generation.

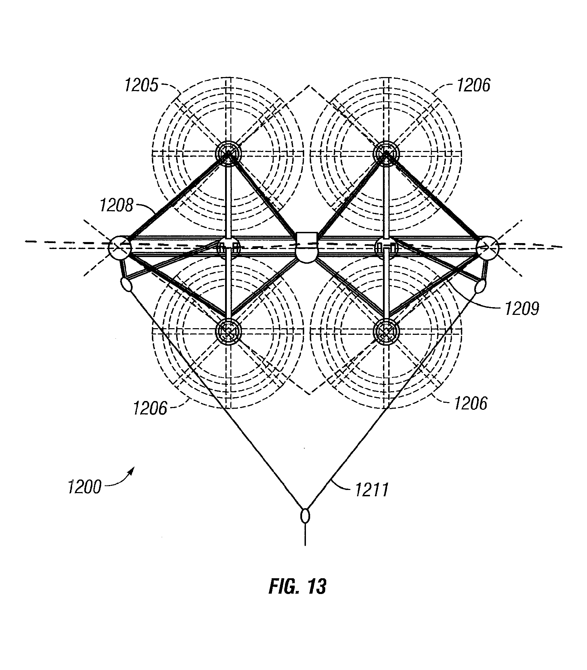

Figure 13 depicts a front view of the example four unit flip design power generation and impeller system 1200, showing impellers 1205, 1206 disposed on a vertical plane while in power generation mode and attached to a Y-type mooring line 1211 for stability. In some embodiments (not shown), as more impellers are added to the system, a weighted spreader bar or other stabilizing apparatus is used to promote improved control and stability characteristics.

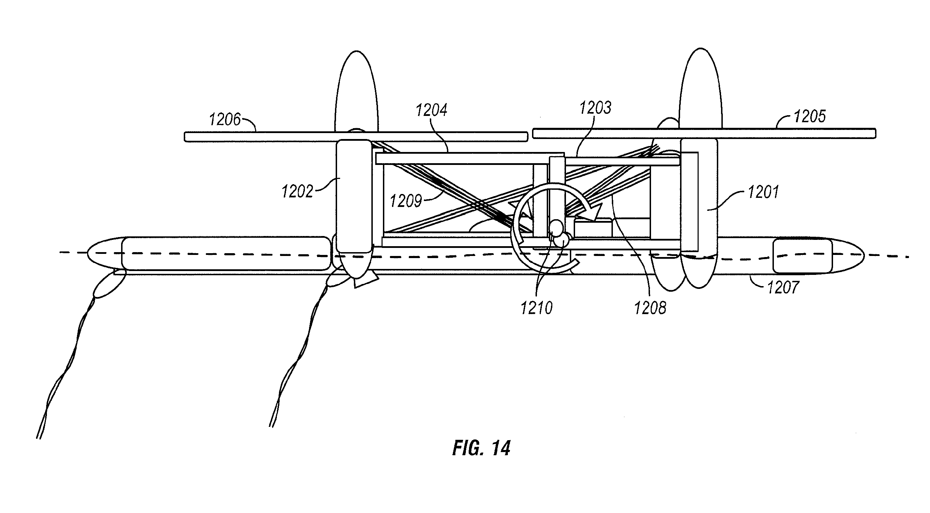

In Figure 14, the example four unit flip design power generation and impeller system 1200 is depicted in repose, shown now in the "flipped up" configuration useful for transportation, installation and maintenance. In one embodiment, the generator pods 1201, 1202 are attached to frames such that they are capable of rotating approximately ninety degrees or more about shafts 1210 disposed in communication with the frames 1203, 1204. This rotation is accomplished manually in some embodiments, or using a logic control system to rotate the pods about the shaft using an associated rotation means, such as a pneumatic rotation means or a hydraulic rotation means, as would occur to an ordinarily skilled artisan practicing similar alternative embodiments.

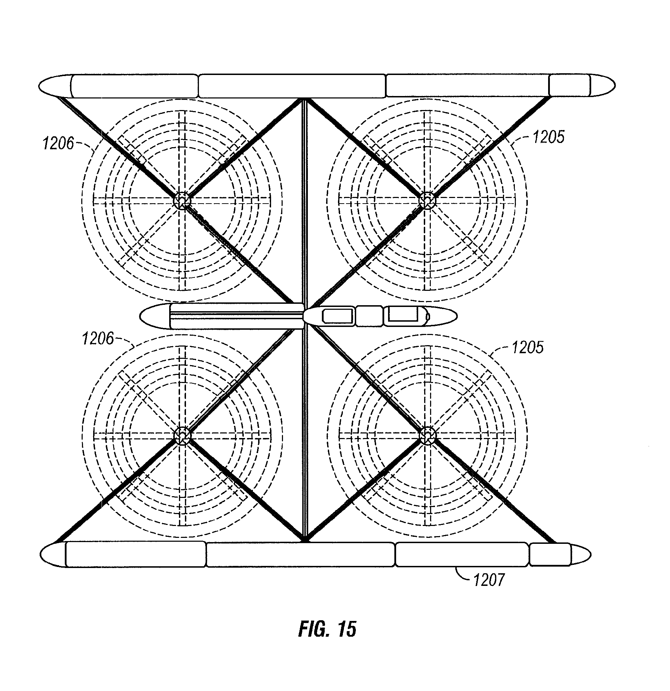

Figure 15 is a top view of the example four unit flip design power generation and impeller system 1200 disposed in a "flipped up" configuration.

In another embodiment, ballasts are manipulated within the flotation chambers 1207 so the generation pods 1201, 1202 and the impellers 1205, 1206 face upward, for towing when the structure is being delivered to the field, or when maintenance to the impellers, generators, gearing, etc., is desired or necessary. When the generation pods and impellers are mostly or fully above the surface level, the impellers are securely stored and cause only minimal instability to the entire structure due to wind or water resistance, etc.

According to various example embodiments, during installation the flip design resembles a pontoon boat at the surface with skid beams on the lower members. To avoid picking up a heavy structure at the installation location, the unit is floated to its desired location or launched from a barge. In transit, if the flipped design is not utilized, the impellers 1206 create a deep ship-like draft, as drag attributable to water resistance could be substantial in fast-moving ocean currents. If the flipped design is not utilized, the top impellers 1205 could act as a wind-sail, causing stability and operational problems until it secured on a mooring system.

For scheduled maintenance, the system 1200 in some embodiments comprises a flipped up configuration (as shown in the example depictions in Figures 14 and 15) and floated to the surface during various predefined weather conditions. Maintenance performed on the system include, but are not limited to, changing gear oil, resupply of the air disposed in the ballast system, and replacement of needed instrumentation. Once at the surface, the flip design positions the impellers out of the water where they are more accessible for maintenance. In still further embodiments, for major service, the entire unit is disconnected from the mooring system and floated to shore or a neighboring service vessel.

While generating power, in certain embodiments, the four-unit flip design power generation system 1200 is located between about 200 feet (60,96 Meter) and about 500 feet (152,4 Meter) below the surface of the water, keeping the system below the vast majority of any ship draft and surface light. This depth is below the majority of many favored species of oceanic fauna; thus, fish and other marine life tend to stay away from the system and closer to their food source, which is generally associated with light near the water surface.

While still other aspects of the invention, which in current practice typically comprise devices associated with underwater energy production generally (for example, auxiliary power supply sources, fiber optic control and communication systems, attendant remote-operated vehicles used to service the power station, etc.), are certainly contemplated as peripherals for use in the deployment, positioning, control and operation of the system, it is not deemed necessary to describe all such items in great detail as such other systems and sub-systems will naturally occur to those of ordinary skill in the pertinent arts.

Though the present invention has been depicted and described in detail above with respect to several exemplary embodiments, ordinarily skilled artisans in the relevant fields will readily appreciate that minor changes to the description, and various other modifications, omissions and additions may also be made without departing from either the spirit or scope thereof.

## Claims

1. A water current power generation system (101, 201, 801, 1200) comprising:
- one or more submerged flotation chambers (1207);
- one or more submerged induction type power generation units (104) disposed in communication with said one or more submerged flotation chambers (1207);
- one or more impellers (105, 202, 407, 408, 501, 802, 803, 901, 902, 1205, 1206) disposed in communication with said one or more submerged induction type power generation units (104);
- one or more body frame members (1203, 1204) disposed in communication with said one or more submerged induction type power generation units (104); and
- one or more impeller rotation means (1210) disposed in communication with said one or more body frame members (1203, 1204).

2. The water current power generation system (101, 201, 801, 1200) of claim 1, wherein said water current power generation system (101, 201, 801, 1200) is at least partially submerged within a body of water, and said one or more submerged induction type power generation units (104) and said one or more impellers (105, 202, 407, 408, 501, 802, 803, 901, 902, 1205, 1206) are rotated by said one or more impeller rotation means (1210) such that said one or more impellers (105, 202, 407, 408, 501, 802, 803, 901, 902, 1205, 1206) are rotated above and approximately parallel to the wave surface of the water during maintenance of the water current power generation system (101, 201, 801, 1200).

3. The water current power generation system (101, 201, 801, 1200) of claim 1, wherein said water current power generation system (101, 201, 801, 1200) is at least partially submerged within a body of water, and said one or more submerged induction type power generation units (104) and said one or more impellers (105, 202, 407, 408, 501, 802, 803, 901, 902, 1205, 1206) are rotated by said one or more impeller rotation means (1210) such that said one or more impellers (105, 202, 407, 408, 501, 802, 803, 901, 902, 1205, 1206) are rotated above and approximately parallel to the wave surface of the water during transportation or relocation of the water current power generation system (101, 201, 801, 1200).

4. The water current power generation system (101, 201, 801, 1200) of claim 1, wherein said water current power generation system (101, 201, 801, 1200) is submerged within a body of water between the body of water floor surface and the wave surface of the water, and said one or more impeller rotation means (1210) is disposed such that said one or more impellers (105, 202, 407, 408, 501, 802, 803, 901, 902, 1205, 1206) are oriented approximately perpendicular to said wave surface of the water during power generation operations.

5. The water current power generation system (101, 201, 801, 1200) of any one of claims 1-4, wherein said one or more impeller rotation means (1210) further comprises one or more rotatable shafts.

6. The water current power generation system (101, 201, 801, 1200) of claim 5, wherein said one or more impeller rotation means (1210) further comprises one or more locking mechanisms.

7. The water current power generation system (101, 201, 801, 1200) of any one of claims 1-6, wherein said water current power generation system (101, 201, 801, 1200) further comprises:
one or more submerged flotation chambers (1207), wherein one or more of said submerged flotation chambers (1207) further comprises one or more buoyant fluid isolation chambers (303, 304, 306), and wherein one or more of said buoyant fluid isolation chambers (303, 304, 306) further comprises one or more of a buoyant fluid disposed therein; a buoyant fluid intake valve (302); a buoyant fluid exit valve (309); and a buoyant fluid control means.

8. A method of maintaining and/ or transporting an at least partially submerged water current power generation system (101, 201, 801, 1200), said method comprising:
- disposing one or more submerged induction type power generation units (104) in communication with one or more impellers (105, 202, 407, 408, 501, 802, 803, 901, 902, 1205, 1206);
- disposing one or more rotatable frames in communication with said one or more submerged induction type power generation units (104);
- lifting said one or more submerged induction type power generation units (104) so that said one or more impellers (105, 202, 407, 408, 501, 802, 803, 901, 902, 1205, 1206) are lifted out of the water; and
- rotating said one or more rotatable frames so that said one or more impellers (105, 202, 407, 408, 501, 802, 803, 901, 902, 1205, 1206) are disposed above and approximately parallel to the surface of the water.

9. The method of maintaining and/ or transporting the at least partially submerged water current power generation system (101, 201, 801, 1200) of claim 8, further comprising disposing said one or more rotatable frames in communication with a rotation shaft.

10. The method of maintaining and/ or transporting the at least partially submerged water current power generation system (101, 201, 801, 1200) of claim 8, further comprising disposing said one or more rotatable frames in communication with a locking rotation shaft.

11. The method of maintaining and/ or transporting the at least partially submerged water current power generation system (101, 201, 801, 1200) of any one of claims 8-10, wherein said rotating step further comprises controlling said rotating using a logic control system disposed in communication with a pneumatic rotation control means.

12. The method of maintaining and/ or transporting the at least partially submerged water current power generation system (101, 201, 801, 1200) of any one of claims 8-10, wherein said rotating step further comprises controlling said rotating using a logic control system disposed in communication with a hydraulic rotation control means.
